Europäisches Patentamt

European Patent Office

Office européen des brevets

(19)

(11) Numéro de publication : **0 156 089**
**B1**

(12) **FASCICULE DE BREVET EUROPÉEN**

(45) Date de publication du fascicule du brevet :
09.09.87

(21) Numéro de dépôt : **84420222.6**

(22) Date de dépôt : **27.12.84**

(51) Int. Cl.⁴ : **B 29 C  69/00**, B 29 C  45/00,
B 62 M   9/12, B 60 B  19/00

(54) **Procédé de fabrication et de montage d'organes tournant entre des flasques et les produits obtenus, utilisables notamment pour tendre et enrouler la chaîne dans les changements de vitesse pour cycles et véhicules similaires.**

(30) Priorité : **12.03.84 FR 8404230**

(43) Date de publication de la demande :
**02.10.85 Bulletin 85/40**

(45) Mention de la délivrance du brevet :
**09.09.87 Bulletin 87/37**

(84) Etats contractants désignés :
**AT BE CH DE GB IT LI LU NL SE**

(56) Documents cités :
**DE-A- 3 016 345
FR-A- 2 315 379
FR-A- 2 520 693
GB-A-   502 816
US-A- 3 362 675**

(73) Titulaire : **Etablissements LE SIMPLEX (société à responsabilité limitée)**
**3 et 5 rue de la Breuchillière Zône Industrielle Dijon St-Apollinaire**
**F-21019 Dijon Cedex (FR)**

(72) Inventeur : **Juy, Henri**
**43 rue Chabot Charny**
**F-21000 Dijon (FR)**

(74) Mandataire : **Dupuis, François**
**Cabinet Charras 3 Place de l'Hôtel-de-Ville**
**F-42000 St.Etienne (FR)**

EP 0 156 089 B1

## Description

L'invention concerne un procédé de fabrication et de montage d'organes tournants entre des flasques et les produits obtenus selon les revendications 1, 2, 6 et leur utilisation selon la revendication 8.

De nombreuses fabrications industrielles, dans des domaines divers, incorporent des organes tournants, dentés, crantés ou non, entre des flasques. C'est le cas, par exemple du bras enrouleur-tendeur de chaîne, qui équipe les changements de vitesse pour les bicyclettes et véhicules similaires. Ce bras est composé d'un ou généralement de deux galets lisses ou crantés périphériquement, qui sont montés en rotation libre sur des axes assemblés à des flasques entre lesquels tournent librement les galets. Le bras pivote dans ce cas sous la poussée d'un moyen élastique, dans un sens convenable afin de maintenir le bras libre de la chaîne suffisamment tendu quel que soit le pignon de la roue libre sur lequel est enroulé la chaîne.

Dans ce cas, l'ensemble du bras comprend une dizaine de pièces qu'il faut fabriquer séparément puis assembler. Le coût de fabrication et le coût du temps nécessité par l'assemblage et le montage des pièces, sont relativement très importants (FR-A-2 520 693).

Suivant l'invention, compte tenu des impératifs généraux de rationalisation des fabrications et de diminution des coûts, pour remédier aux inconvénients précités, on a conçu le procédé de fabrication et de montage qui est principalement caractérisé en ce que l'on exécute par moulage par injection de préférence, un premier flasque qui est formé en une seule pièce avec un ou des tenons en saillie sur une face dudit flasque et avec un ou des organes destinés à tourner dont chacun est relié à un tenon par une ou des parties d'attache ; on exécute également par moulage par injection de préférence, un deuxième flasque qui est formé d'une seule pièce avec une ou des portées en saillie sur une face dudit flasque, chacune des portées étant conformée pour être engagée dans le logement cylindrique central et un organe tournant et par emmanchement serré sur le tenon correspondant du premier flasque ; on rapproche les flasques ainsi exécutés et on engage sous une pression convenable la ou les portées du deuxième flasque dans le ou les logements cylindriques centraux du ou des organes tournants puis l'engagement de la ou desdites portées sur le ou les tenons correspondants, en provoquant automatiquement, dans cette opération, la rupture des parties d'attache reliant les organes tournants aux tenons, ce qui libère le ou les organes tournants qui peuvent alors être entraînés en rotation libre autour des portées.

Les avantages obtenus grâce à cette invention, consistent essentiellement en ce que, non seulement la fabrication est simplifiée autant qu'il est possible, mais encore l'assemblage ou montage est à peu près instantané, sans nécessiter de réglage ou autres opérations, alors qu'il fallait précédemment, pour un ensemble analogue, assembler une dizaine de pièces.

Un mode d'exécution de l'invention est exposé ci-après plus en détail, à l'aide des dessins.

La figure 1 montre par une vue d'ensemble en coupe, sous une forme donnée à titre d'exemple, un ensemble de deux flasques illustrés séparément, avec les parties complémentaires et organes tournants rattachés aux tenons de l'un des flasques.

La figure 2 est une vue de côté considérée suivant la ligne 2-2 de la figure 1.

La figure 3 est une vue semblable à la figure 1 après rapprochement des flasques et engagement forcé des parties complémentaires et la libération des organes tournants.

La figure 4 montre, par une vue de côté, une réalisation de l'ensemble flasque et organes tournants réalisés et assemblés selon l'invention, sous la forme d'un bras enrouleur-tendeur de chaîne pour un changement de vitesse pour bicyclette.

La figure 5 montre par une vue en perspective, le même ensemble que celui de la figure 4, équipant une changement de vitesse pour cycle qui est représenté seulement à titre d'exemple.

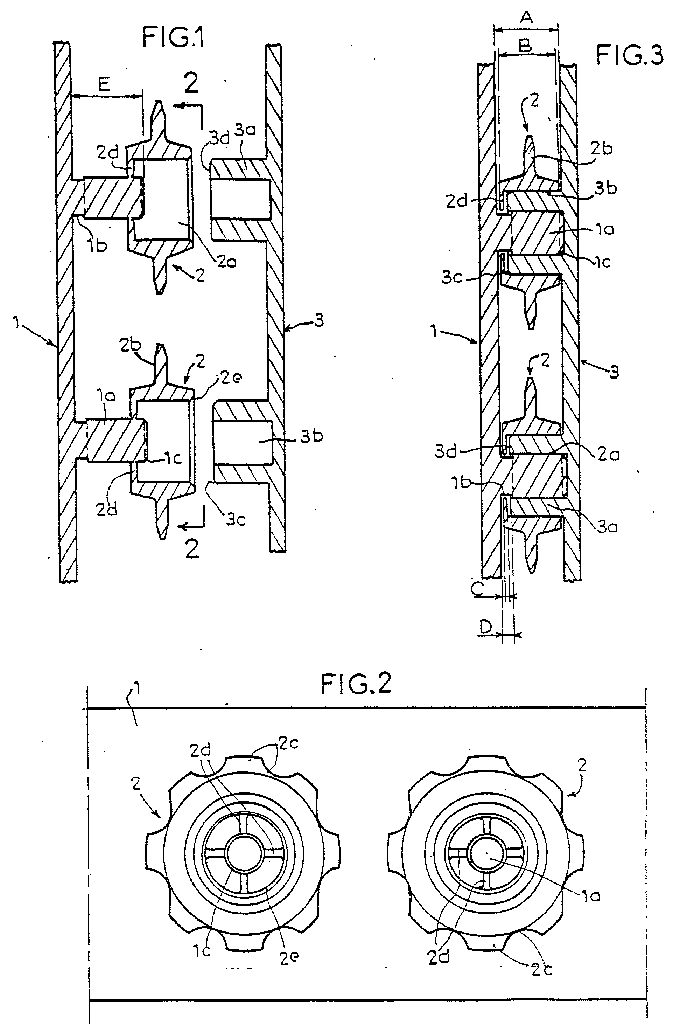

L'objet de l'invention est rendu plus concret en décrivant le procédé illustré sous la forme de réalisation des figures 1 à 3.

On voit à la figure 1, un ensemble qui est en deux parties, chacune étant exécutée par moulage par injection de préférence et d'une manière particulièrement visée, quoique non limitative.

La première partie comprend un flasque (1) qui a toutes formes ajourées ou non, tout profil extérieur, toutes dimensions, appropriées aux utilisations. La partie du profil extérieur illustré à la figure 2 n'est qu'un exemple.

Le premier flasque (1) est formé en une seule pièce avec les tenons (1a) en saillie sur une face de ce flasque. A la base de chacun des tenons (1a) est formé une gorge ou dégagement circulaire (1b) destiné à faciliter le montage, et à ne pas gêner ensuite la rotation des organes tournants. L'extrémité des tenons (1a) est chanfreinée en (1c).

Des parties (2) sont également formées d'une seule pièce avec le flasque (1) et les tenons (1a). Les parties (2) sont destinées à constituer les organes tournants, et ont une configuration en conséquence. Selon l'exemple illustré, le corps des organes (2) présente un logement cylindrique central (2a) et un disque (2b) formant à sa périphérie des crans (2c). Au lieu des crans (2c), la périphérie pourrait être lisse ou former des dents d'engrenage ou autres conformations. De préférence, le logement (2a) présente à l'extrémité ouverte un chanfrein (2e).

Les organes (2) sont reliés chacun à un tenon (1a) par des languettes d'attache (2d) que l'on voit bien aux figures 1 et 2. Au lieu de languettes dont le nombre peut varier, la liaison pourrait être assurée par exemple par une membrane pleine.

Comme il sera indiqué plus loin, les languettes ou parties d'attache (2d) doivent être rompues lors de l'assemblage, afin de libérer en rotation les organes (2). Cette rupture s'opère normalement en (2d) au niveau de la face des tenons. On peut favoriser cette rupture au point précis souhaité, par exemple en formant un affaiblissement en ce point de la section des languettes (2d), par un agencement approprié du moule.

Le deuxième flasque 3 est formé en une seule pièce avec des portes évidées (3a) en saillie sur une face de ce flasque. Dans chacune des portées (3a) est formé un logement (3b) destiné à être adapté par emmanchement serré sur le tenon (1a) correspondant.

Les portées (3a) ont une conformation extérieure cylindrique pour être engagées dans les logements (2a) des organes (2), l'ajustement autorisant la rotation libre des organes tournants (2), après l'assemblage. L'extrémité des portées (3a) présente de préférence un chanfrein (3c).

Après l'exécution des deux flasques (1 et 3) avec leurs parties complémentaires et organes (2), l'assemblage ou montage s'opère d'une manière particulièrement rapide en rapprochant les flasques et leurs diverses parties avec les organes (2) et en engageant, sous une pression convenable, les portées (3a) dans les logements (2a) et sur les tenons (1a), en même temps que se produit, au cours de cette opération d'engagement, la rupture en (2d) des languettes (2d) sous la poussée de la face (3d) à l'extrémité de la portée (3a). Les organes (2) sont donc libérés et peuvent tourner autour des portées (3a). C'est l'extrémité des tenons (1a) qui vient en appui au fond des logements (3b).

Il est évident que, pour le bon fonctionnement de l'ensemble à flasques et organes tournants, le dimensionnement en vue de l'assemblage des diverses parties doit être soigneusement établi afin que :

lorsque l'extrémité des tenons (1a) vient en appui au fond des logements (3b), l'intervalle (A) entre les faces intérieures des flasques (1 et 3), est supérieur à la largeur (B) des organes tournants (2), tandis que la dimension (D) entre la face intérieure du flasque (1) et la face (3d) à l'extrémité des portées (3a), est sensiblement supérieure à l'épaisseur (C) des languettes (2d) ;

la longueur (E) des tenons (1a) au-delà de la face intérieure du flasque (1) est égale à la longueur des logements (3b) et à la dimension (D) ensemble ;

les organes (2) sont ajustés pour tourner librement sur les portées (3a) ;

l'épaisseur des languettes (2d) (ou membrane) se place dans l'intervalle (D) avec du jeu, normalement, par rapport à la face intérieure du flasque (1) et à la face (3d) ;

les tenons (1a) et les logements (3d) sont engagés ensemble par emmanchement forcé qui assure l'assemblage et empêche toute séparation accidentelle des flasques. Si une réparation est nécessaire, on remplace tout l'ensemble, compte tenu de son prix de revient très économique.

Les tenons (1a) et les logements (3b) ont une conformation cylindrique, la gorge (1b) demeurant cependant circulaire comme déjà indiqué.

On a illustré un ensemble à deux tenons, deux portées, deux organes ou galets tournants. L'ensemble peut, en variante, être agencé dans ses composants pour ne comporter qu'un seul organe ou galet tournant, ou plus de deux organes ou galets.

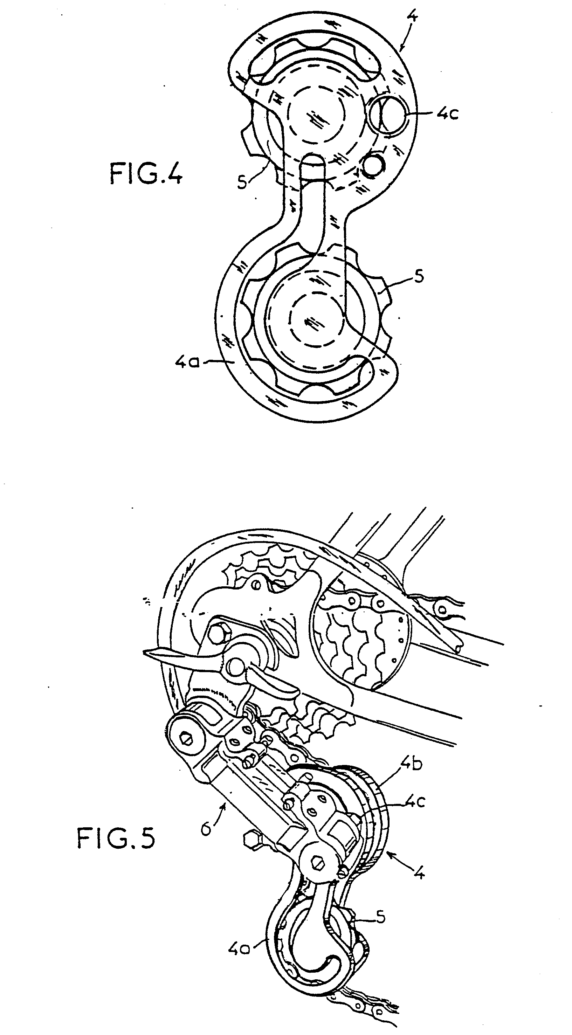

L'ensemble selon le procédé et les caractéristiques de l'invention peut trouver de nombreuses utilisations. D'une manière intéressante et particulièrement visée, on réalise ainsi des bras enrouleur-tendeur de chaîne pour les changements de vitesse pour bicyclettes et véhicules similaires, par exemple sous la forme de réalisation représentée aux figures 4 et 5.

On y voit l'ensemble bras-enrouleur désigné par (4) qui est constitué par les deux flasques (4a-4b) et les organes tournants ou galets (5), exécutés et montés selon les caractéristiques de l'invention. Le flasque (4a) est agencé pour présenter en (4c) une partie assemblée d'une manière articulée au dispositif de déplacement transversal du changement de vitesse, ce dispositif étant, dans l'exemple illustré non limitativement, un système à parallélogramme articulé (6).

Les flasques et organes tournants peuvent être exécutés en « DELRIN » ou autre matière plastique de caractéristiques convenables, éventuellement en métal ou alliage, ou encore en une combinaison des deux.

L'invention telle que définie dans les revendications ne se limite aucunement à celui de ses modes d'application non plus qu'à ceux des modes de réalisation de ses diverses parties ayant plus spécialement été indiquées.

**Revendications**

1. Procédé de fabrication et de montage d'organes tournants entre des flasques, caractérisé en ce que l'on exécute par moulage par injection de préférence, un premier flasque (1) qui est formé en une seule pièce avec un ou des tenons en saillie (1a) sur une face dudit flasque, et avec un ou des organes (2) destinés à tourner dont chacun est relié à un tenon (1a) par une ou des parties d'attache (2d) ; on exécute également par moulage par injection de préférence, un deuxième flasque (3) qui est formé d'une seule pièce avec une ou des portées en saillie (3a) sur une face dudit flasque, chacune de la ou des portées étant conformée pour être engagée, dans le logement cylindrique central (2a) de chaque organe tournant (2) et par emmanchement serré sur le tenon (1a) correspondant du premier flasque (1) ; on rapproche les flasques ainsi exécutés et on engage sous une pression convenable la ou les portées du deuxième flasque dans le ou les logements cylindriques centraux du ou des organes tournants, puis l'engagement de la ou desdites portées sur le ou les tenons correspondants, en provoquant automatiquement, dans cette opération, la rupture des parties d'attache reliant les organes tournants aux tenons, ce qui libère le ou les organes tournants qui peuvent alors être entraînés en rotation libre autour des portées.

2. Premier flasque (1) pour être utilisé dans un procédé selon la revendication 1, caractérisé en ce qu'il est exécuté en une seule pièce (1) par moulage par injection de préférence, avec un des tenons en saillie (1a) sur une face et avec un ou des organes (2) destinés à tourner dont chacun est relié à un tenon par une ou des parties d'attache.

3. Premier flasque (1) selon la revendication 2, présentant une gorge ou dégagement circulaire (1b) à la base de chacun des tenons (1a) dont l'extrémité est chanfreinée.

4. Premier flasque (1) selon la revendication 2, dont le ou les organes (2) destinés à tourner dont le corps présente un logement cylindrique central (2a) chanfreiné, et un disque (2b) ou autre prolongement du corps, dont la périphérie peut être lisse, crantée ou dentée, les parties (2d) d'attache en forme de languette étant réalisées entre les organes (2) et le tenon (1a), ces languettes étant destinées à être rompues.

5. Premier flasque selon la revendication 2, qui présente un affaiblissement (2d) favorisant la rupture aux points où les languettes sont liées à la face des tenons (1a).

6. Deuxième flasque (3) pour être utilisé dans un procédé selon la revendication 1, caractérisé en ce qu'il est exécuté en une seule pièce (3), par moulage par injection de préférence, avec une ou des portées évidées (3a) en saillie sur une face du flasque, un logement (3b) étant formé dans chaque portée pour être adapté par emmanchement serré sur un tenon correspondant (1a) du premier flasque (1), les portées (3a) ont une conformation extérieure cylindrique pour coopérer avec les logements (2a) des organes tournants.

7. Deuxième flasque selon la revendication 6, dont les portées (3a) ont leur extrémité chanfreinée (3c).

8. Utilisation de l'ensemble de flasques et organes tournants suivant l'une quelconque des revendications précédentes pour un bras enrouleur-tendeur de changement de vitesse pour bicyclettes et véhicules similaires.

**Claims**

1. Method for manufacturing and mounting rotary organs between cheeks, characterized in that a first cheek (1) is made preferably by injection moulding and is converted in one piece with one or more projecting studs (1a) on one face of said cheek, and with one or more organs (2) intended for being rotated, each one of them being connected to a stud (1a) by one or more fastening parts (2d), a second cheek (3) being also made preferably by injection moulding and formed of one piece with one or more projecting bosses (3a) on one face of said cheek, said boss or each one of said bosses being adapted to be engaged within the central cylindrical housing (2a) of each rotary organ (2) and by tight dricing in on the corresponding stud (1a) of the first cheek (1) ; the cheeks which have been thus made being neared together and the boss or the bosses of the second cheek being engaged under a suitable pressure in the central cylindrical housing or housing of the rotary organ or organs, with the subsequent engagement of said boss or bosses on the corresponding stud or studs, causing automatically during this step the breakage of the fastening parts connecting the rotary parts to the studs, releasing thereby the rotary organ or organs which are thus enabled to be driven for free rotation round the bosses.

2. First cheek (1) to be used in a method as claimed in Claim 1, characterized in that this cheek is made of one piece (1), preferably by injection moulding, with one or more projecting studs (1a) on one face, and with one or more organs (2) intended for being rotated, each one of the latter being connected to a stud by means of one or more fastening parts.

3. First cheek (1) as claimed in Claim 2, provided with a circular clearance or groove (1b) at the bottom of each one of the studs (1a), the end of which is bevelled.

4. First cheek (1) as claimed in Claim 2, the organ or organs (2) of which intended for being rotated has or have a body provided with a bevelled central cylindrical housing (2a), and with a disk (2b) or other extension of the body, the periphery of which can be smooth, notched or toothed, tongue-shaped fastening parts (2d) being provided between the organs (2) and the stud (1a), said tongues being intended for breakage.

5. First cheek (1) as claimed in Claim 2, and having a weakening (2d) to make the breaking easier at the points where the tongues are connected to the face of the studs (1a).

6. Second cheek (2) to be used in a method as claimed in Claim 1, characterized in that this cheek is made of one piece (3), preferably by injection moulding, with one or more recessed bosses (3a) projecting on one face of the cheek, a housing (3b) being formed in each boss to be adapted by tight dricing in on a corresponding stud (1a) of the first cheek (1), the bosses (3a) having a cylindrical external contour for co-operation with the housings (2a) of the rotary organs.

7. Second cheek (2) as claimed in Claim 6, the bosses (3a) of which have their ends bevelled (3c).

8. Use of the assembly of cheeks and rotary organs as claimed in any one of the foregoing Claims, for a winding and stretching arm of a gear speed device for bicycles and the like.

**Patentansprüche**

1. Verfahren zur Herstellung und zum Aufbau von drehbaren Organen zwischen Wangen, dadurch gekennzeichnet, dass eine erste Wange (1), vorzugsweise durch Einspritzformung, in einem einzigen Stück mit einem oder mehreren vorspringenden Stiften (1a) auf einer Seitenfläche der besagten Wange sowie mit einem oder mehreren Organen (2) geformt wird, die für Drehbewegung vorgesehen sind, wobei jedes eine dieser Organe mit einem Stift (1a) durch einen oder mehrere Befestigungsteile (2d) verbunden wird ; dass eine zweite Wange (3), auch vorzugsweise durch Einspritzformung, in einem einzigen Stück mit einem oder mehreren vorspringenden Stiftsitzen (3a) auf einer Seitenfläche der besagten Wange geformt wird, wobei jeder eine Stiftsitz oder der einzige Stiftsitz zum Eingreifen in das zylindrische Zentralgehäuse (2a) jedes Drehorgans (2) sowie zum Eingreifen durch festes Anziehen auf den entsprechenden Stift (1a) der ersten Wange (1) vorgesehen ist ; und dass die so hergestellten Wangen angenühert werden, mit dem Eingreifen unter einem angmessenen Druck des oder der Stiftsitze der zweiten Wange in das oder die zylindrischen Zentralgehäuse des oder der Drehorgane und dann mit dem Eingreifen des oder der besagten Stiftsitze auf den entsprechenden Stift oder auf die entsprechenden Stifte, wobei der Bruch der die Drehorgane mit den Stiften verbindenden Befestigungsteile während diesem Arbeitsvorgang verursacht wird, bei entsprechendem Freimachen des oder der Drehorgane, die somit frei drehbar um die Stiftsitze angetrieben werden können.

2. Erste Wange (1) zur Verwendung in einem Verfahren nach Anspruch 1, dadurch gekennzeichnet, dass diese Wange in einem einzigen Stück (1) vorzugsweise duch Einspritzformung hergestellt wird, und weist vorspringende Stifte (1a) auf einer Seitenfläche mit einem oder mehreren Organen (2) auf, das oder die für Umdrehung vorgesehen ist oder sind, wobei jedes Organ mittels eines oder mehrerer Befestigungsteile mit einem Stift verbunden wird.

3. Erste Wange (1) nach Anspruch 2, die eine Rille oder einen kreisförmigen Spielraum (1b) am Unterteil jedes einen der Stifte (1a) mit abgeschrägtem Ende aufweist.

4. Erste Wange (1) nach Anspruch 2, mit dem oder den für Umdrehung vorgesehenen Organ oder Organen (2) und mit einem Körperteil, der ein abgeschrägtes, zylindrische Zentralgehäuse (2a) sowie eine Scheibe (2b) oder eine Verlängerung des Körperteils aufweist, wobei der Umfang glatt, eingekerbt oder verzähnt sein kann und passfederförmige Befestigungsteile (2d) zwischen den Organen (2) und dem Stift (1a) vorgesehen sind, die zum Abbrechen ausgebildet werden.

5. Erste Wange (1) nach Anspruch 2, die eine Abschwächung (2d) zur Erleichterung des Abbrechens an den Stellen aufweist, wo die passförmigen Befestigungsteile mit der Seitenfläche der Stifte (1a) verbunden sind.

6. Zweite Wange (2) zur Verwendung in einem Verfahren nach Anspruch 1, dadurch gekennzeichnet, dass diese Wange in einem einzigen Stück (3) vorzugsweise durch Einspritzformung und mit einem oder mehreren vorspringenden ausgehöhlten Stiftsitz oder Stiftsitzen (3a) auf einer Seitenfläche der Wange hergestellt wird, und dass eine Gehäuse (3b) in jedem Stiftsitz ausgebildet und für ein festes Anziehen auf einen entsprechenden Stift (1a) der ersten Wange (1) vorgesehen ist, wobei die Stiftsitze (3a) eine zylindrische Aussenformgebung zum Mitwirken mit den Gehäuse (2a) der Drehorgane aufweisen.

7. Zweite Wange nach Anspruch 6, derer Stiftsitze (3a) mit abgeschrägten Enden (3c) vorgesehen sind.

8. Verwendung der Vorrichtung von Wangen und Drehorganen nach einem der vorherigen Ansprüche, für Aufroll- und Spannarm von Wechselgetriebe für Fahrräder oder ähnliche Fahrzeuge.

**0 156 089**

FIG.1

FIG.3

FIG.2

FIG.4

4

4c

5

5

4a

FIG.5

4b

4c

6

4

5

4a